# EUROPÄISCHE PATENTSCHRIFT

(11) **EP 1 095 799 B1**
(45) Veröffentlichungstag und Bekanntmachung des Hinweises auf die Patenterteilung: **28.04.2004**
(21) Anmeldenummer: 00122545.7
(22) Anmeldetag: 16.10.2000
(51) Int. Cl.: B60C 23/00

(54) **Reifendruckregelanlage**
Device for regulating tyre pressure
Installation de réglage de la pression de pneus

(30) Priorität: 19.10.1999 DE 19950191
(43) Veröffentlichungstag der Anmeldung: 02.05.2001
(73) Patentinhaber: Tigges, Martin, 41468 Neuss (DE)
(72) Erfinder: Tigges, Martin, 41468 Neuss (DE)
(74) Vertreter: Schröter & Haverkamp

(56) Entgegenhaltungen:
- EP-A- 0 816 135
- EP-B- 0 377 561
- DE-C- 19 757 000

## Beschreibung

Die Erfindung betrifft eine Reifendruckregelanlage für Kraftfahrzeuge
- mit einer Drehdurchführung zum Übertragen eines Druckmittels von einem gegenüber einem drehbar gelagerten Rad feststehenden Teil des Kraftfahrzeugs auf das drehbar gelagerte Rad,
- wobei die Drehdurchführung zumindest eine durch einen statorseitig und durch einen rotorseitig konzentrisch zur Drehachse des Rades angeordneten Ringkörper begrenzte Kammer aufweist, und
- wobei zur Abdichtung der zumindest einen Kammer zwischen dem statorseitigen Ringkörper und dem rotorseitigen Ringkörper Dichtringe eingesetzt sind,

Reifendruckregelanlagen werden bei Kraftfahrzeugen, insbesondere bei Nutzfahrzeugen wie Lastkraftwagen, Ackerschleppem oder Erdbewegungsmaschinen eingesetzt, um den Reifendruck an unterschiedlichen Untergrund - unterschiedliches Gelände, Straße - oder auch an unterschiedliche Beladungszustände anpassen zu können. In Abhängigkeit des zu befahrenden Geländes kann es zweckmäßig sein, in dem Gelände mit einem geringeren Reifendruck zu fahren als auf einer befestigten Fahrbahn. Durch unterschiedlichen Reifendruck wird die Aufstandsfläche des Reifens verändert, um beispielsweise bei einem weichen Untergrund mit einem geringeren Reifendruck eine möglichst große Aufstandsfläche und somit ein Einsinken zu verhindern. Durch die Änderung der Aufstandsfläche läßt sich auch die Walkarbeit des Reifens verändern und an die jeweilige Situation anpassen, so daß ein unnötiger Reifenverschleiß vermieden ist.

Eine gattungsgemäße Reifendruckregelanlage ist in der EP 0 377 561 B1 beschrieben. Diese vorbekannte Reifendruckregelanlage verwendet zur Drehdurchführung zum Übertragen eines Druckmittels - Druckluft zum Befüllen des Reifens - von dem feststehenden Teil des Kraftfahrzeuges auf das beweglich gelagerte Rad eine Drehdurchführung. Die Drehdurchführung ist durch zwei konzentrisch zueinander angeordnete Rohrabschnitte gebildet, zwischen denen durch Ringdichtungen abgedichtet zwei in axialer Richtung bezogen auf die Drehachse des Rades nebeneinander bezüglich des Rades liegende Kammern angeordnet sind. Der eine Rohrabschnitt ist an dem feststehenden Achstrichter der Radachse befestigt und stellt den statorseitigen Ringkörper dar. Der andere Rohrabschnitt ist an dem Radflansch befestigt und stellt den rotorseitigen Ringkörper dar. Diese einen zylindrischen Abschnitt hinter dem Radflansch einnehmende Drehdurchführung erstreckt sich somit von dem Radflansch bis über den Achskörper. Die Erstreckung der Drehdurchführung in dieser Richtung ist bestimmt durch die Anzahl der eingesetzten Kammern, Ober die Druck-, Meß- und/oder Füllmittel zu übertragen sind. Jede dieser Kammern ist durch zwei Dichtringe in axialer Richtung abgedichtet. Jeder Dichtring muß zum Erzielen der gewünschten Abdichtung sowohl an dem statorseitigen Rohrabschnitt sowie an dem rotorseitigen Rohrabschnitt anliegen.

Nachteilig bei dieser Reifendruckregelanlage ist der benötigte Einbauraum in axialer Richtung. Daher kann diese bekannte Reifendruckregelanlage beispielsweise nicht an Rädern montiert werden, die über ein Kreuzgelenk - wie sie bei Lenkachsen vorgesehen sind - mit einem Antriebsstrang verbunden sind.

Bei dem der EP 0 377 561 B1 beschriebenen Zweikammersystem dient die eine Kammer zum Übertragen eines Steuermittels an ein dem Reifen zugeordnetes Füllventil, mit dem das Füllventil beispielsweise pneumatisch geöffnet und geschlossen werden kann. Die weitere Kammer dient zum Übertragen des Druckmittels zum Befüllen oder auch zum Entlüften des Reifens. Neben diesem Zweikammersystem sind auch Einleitungssysteme bekannt geworden, bei denen die Druckluftleitung durch die Nabe und das Lager des Rades hindurchgeführt ist. Auch bei diesem System sind zwei konzentrisch zueinander angeordnete Ringkörper vorgesehen, wobei der eine feststehend und der andere drehbar zu diesem gelagert ist. Bei diesem System ist jedoch von Nachteil, daß die Druckluftleitung und auch die Kammer durch die ölgefüllte Nabe geführt werden müssen. Undichtigkeiten an der Drehdurchführung führen dazu, daß Luft in das Öl eintritt und somit die Schmier- und Kühlwirkung des Öls soweit beeinträchtigt werden kann, daß dies zu einer Zerstörung der Nabe führen kann.

Beiden beschriebenen Systemen gemein ist, daß bei diesen Berührungsdichtungen eingesetzt sind, was insbesondere bei über einen längeren Zeitraum nicht bewegten Kraftfahrzeugen, wie beispielsweise Militärfahrzeuge ein Verkleben der Dichtung mit dem angrenzenden Ringkörper zur Folge haben kann. Bei einer anschließenden Bewegung des Kraftfahrzeuges wird diese Ringdichtung von dem Ringkörper abgerissen. Auch wenn dies nicht zu einer Zerstörung des Dichtringes führt, so ist zumindest die Dichtwirkung erheblich beeinträchtigt. Dieses Verkleben wird auch als Slip-Stick-Effekt bezeichnet.

Der Erfindung liegt daher die Aufgabe zugrunde, eine gattungsgemäße Reifendruckregelanlage dergestalt weiterzubilden, daß mit dieser die Dichtigkeit der Reifendruckregelanlage verbessert wird und sich die Reifendruckregelanlage auch zum Einbau bei solchen Kraftfahrzeugen eignet, bei denen in axialer Richtung des Rades nur ein geringer Einbauraum zur Verfügung steht.

Diese Aufgabe wird erfindungsgemäß dadurch gelöst, daß
- der statorseitige Ringkörper und der rotorseitige Ringkörper in axialer Richtung bezogen auf die Drehachse des Rades nebeneinanderliegend, einen Bewegungsspalt belassend angeordnet sind,
- in die zum rotorseitigen Ringkörper weisende Fläche des statorseitigen Ringkörpers zur radialen Abdichtung der zumindest einen Kammer zwei konzentrische Ringnuten eingebracht sind,
- die Ringnuten mit ihrem von dem rotorseitigen Ringkörper wegweisenden Abschluß an eine mit einem Druckmittel beaufschlagbare Steuerleitung angeschlossen sind,
- in die Ringnuten jeweils einer der Dichtringe eingesetzt ist, der bei Druckbeaufschlagung der Steuerleitung in Richtung zum rotorseitigen Ringkörper hin bewegt wird, und
- von dem rotorseitigen Ringkörper in die zumindest eine Kammer eine Abgangsleitung mündet.

Bei der erfindungsgemäßen Reifendruckregelanlage ist vorgesehen, daß die beiden Ringkörper in einer axialen und nicht wie beim vorbekannten Stand der Technik in einer konzentrischen Anordnung zueinander angeordnet sind. Die Anzahl oder die Breite der eingesetzten Kammern trägt bei dieser Reifendruckregelanlage daher nicht in axialer sondern in radialer Richtung auf, in einer Richtung also, in der in jedem Falle ausreichend Bauraum zur Verfügung steht. Die Drehdurchführung der erfindungsgemäßen Reifendruckregelanlage ist an quasi jedem beliebigen Rad auf dem Radflansch oder auch auf der Bremstrommel befestigbar, auch wenn etwa ein Kreuzgelenk im Antriebsstrang unmittelbar benachbart zu dem Radflansch vorgesehen ist.

Die Ausdehnung einer durch die beiden Ringkörper gebildeten Kammer erstreckt sich in radialer Richtung zur Drehachse des Rades und ist durch zwei Dichtringe begrenzt und in dieser Richtung abgedichtet. Im Gegensatz zu vorbekannten Reifendruckregelanlagen mit einer konzentrischen Anordnung der beiden Ringkörper zueinander und dem dadurch bedingten zwingenden Einsatz von Berührungsdichtungen ist beim Gegenstand der Erfindung vorgesehen, die Kammer nur dann mit den Dichtringen abzudichten, wenn tatsächlich der Reifendruck reguliert werden soll. Ansonsten soll eine Abdichtung nicht erfolgen und ist auch nicht notwendig. Zu diesem Zweck sind in den statorseitigen Ringkörper zwei konzentrisch zueinander angeordnete Ringnuten (Nut) eingebracht, in die jeweils ein Dichtring eingesetzt ist. Das rückwärtige Ende jeder Nut ist an eine Steuerleitung angeschlossen, so daß die Nuten druckbeaufschlagbar sind. Eine Druckbeaufschlagung der Nuten resultiert sodann in einer Bewegung der eingesetzten Dichtringe zum rotorseitigen Ringkörper hin, solange, bis die Dichtungen den rotorseitigen Ringkörper berühren. In dieser Stellung der Dichtringe ist die durch die Dichtringe begrenzte Kammer abgedichtet. Nach einem Beenden des Be- oder Entlüftungsvorganges des Reifens werden die Nuten wieder in ihren drucklosen Zustand gebracht, so daß die Dichtringe durch die natürliche Unwucht der beiden Ringkörper zueinander wieder geringfügig in die Nuten hinein gedrückt werden. Diese Dichtmaßnahme hat einen nur sehr geringen Dichtungsverschleiß zur Folge, da ein tatsächlicher Berührungs- und Verschleißkontakt nur in denjenigen Zeitpunkten gegeben ist, in denen eine Reifenbe- oder entlüftung erfolgt. Überdies können die Dichtringe eine bestimmte Materialvorgabe aufweisen, so daß ein Austausch der Dichtringe an bestimmte Wartungszyklen des Kraftfahrzeuges angepaßt werden kann.

Von dem rotorseitigen Ringkörper mündet eine Abgangsleitung, beispielsweise eine Bohrung in die Kammer, so daß ein in die Kammer eingebrachtes Druckmittel Ober diese Abgangsleitung dem Reifen zugeführt werden kann.

Die Kammer der Drehdurchführung zum Übertragen des Druckmittels kann allein dadurch ausgebildet sein, daß die radiale Begrenzung durch die Dichtringe erfolgt. Ist jedoch vorgesehen, zwischen den beiden Ringkörpem nur einen schmalen Bewegungsspalt zu belassen, kann vorgesehen sein, in eine der beiden oder auch in beide Flächenanteile der durch die Ringkörper bereitgestellten Kammerbegrenzung eine den Kammerquerschnitt vergrößernde Nut einzubringen.

Die erfindungsgemäße Reifendruckregelanlage eignet sich sowohl zum Betreiben eines Einleitungssystemes als auch zum Betreiben eines Zweioder Mehrleitungssystems. Bei einem Zwei- oder Mehrleitungssystem ist jede Kammer durch zwei Dichtungen in der beschriebenen Art begrenzt. Dabei kann vorgesehen sein, daß zwei benachbarte Nuten durch eine einzige gemeinsame Dichtung von einander getrennt sind.

In einer zweckmäßigen Ausgestaltung ist vorgesehen, in einer Dichtnut neben einem darin durch die Druckbeaufschlagung eingesetzten ersten Dichtring einen weiteren Dichtring anzuordnen, der zur Kontaktierung des rotorseitigen Ringelements dient. Die Eigenschaften des ersten Dichtringes dienen zur Abdichtung der Nut. Der weitere Dichtring weist eine besonders hohe Abriebs- und Wärmebeständigkeit aus, so daß durch die Eigenschaften ein Verschleiß der Dichtungen bei ihrer Kontaktierung des rotorseitigen Ringkörpers reduziert ist

Weitere Vorteile und Weiterbildungen der Erfindung sind Bestandteil weiterer Unteransprüche sowie der nachfolgenden Beschreibung eines Ausführungsbeispieles unter Bezugnahme auf die beigefügten Figuren.

Es zeigen:
- **Fig. 1:**: Einen schematisierten Teilquerschnitt durch einen Radflansch mit einer darauf angeordneten Drehdurchführung einer Reifendruckregelanlage,
- **Fig. 2:**: Eine schematisierte Frontansicht auf den statorseitigen Ringkörper der Reifendruckregelanlage der Figur 1 und
- **Fig. 3:**: Eine vergrößerte Darstellung der Drehdurchführung der Figur 1 in ihrer Nicht-Betriebsstellung und
- **Fig. 4:**: Die Drehdurchführung der Figur 3 in ihrer Betriebs-Stellung.

Eine Reifendruckregelanlage 1 umfaßt neben weiteren, nicht dargestellten Komponenten eine Drehdurchführung 2 zum Übertragen eines Druckmittels von dem gegenüber einem drehbar gelagerten Rad 3 feststehenden Teil eines Kraftfahrzeuges auf das Rad 3. Die Drehdurchführung 2 umfaßt zwei axial bezüglich der Drehachse des Rades 3 nebeneinander angeordnete Ringkörper 4, 5, wobei der Ringkörper 4 statorseitig und somit am Kraftfahrzeug und der Ringkörper 5 rotorseitig und somit am Rad 3 befestigt ist. Der Ringkörper 4 stützt sich in nicht dargestellter Weise auf dem den Antriebsstrang 6 umgebenen Achskörper 7 ab. Der rotorseitige Ringkörper 5 ist mittels eines Halteflansches 8 an dem Radflansch 9 des Rades 3 befestigt. Dabei kann vorgesehen sein, daß der Halteflansch 8 mit den auf den Radbolzen 10 aufzuschraubenden Radmuttem zusammen mit der Felge gehalten ist.

Zwischen den beiden Ringkörpem 4, 5 ist ein Bewegungsspalt 11 belassen, der in radialer Richtung durch zwei konzentrisch angeordnete Führungsbänder 12, 13 gegenüber einem Eindringen von Verunreinigungen wie Schmutz und/oder Wasser abgedichtet ist. In die den Bewegungsspalt 11 begrenzende Fläche des statorseitigen Ringkörpers 4 sind zwei konzentrisch zueinander angeordnete Ringkammem 14, 15 zur Übertragung eines Druckmittels eingebracht. Die Kammer 14 dient als Arbeitskammer zum Übertragen eines für die Reifenbefüllung benötigten Druckmittels, beispielsweise Luft; die Kammer 15 dient als Signalkammer zum Übertragen eines Druckmittels zum Betätigen eines dem Reifen zugeordneten Füllventils. Die Arbeitskammer 14 ist bezüglich ihrer Querschnittsfläche erheblich größer vorgesehen als die Signalkammer 15, damit eine Beoder Entlüftung des Reifens in kurzer Zeit durchgeführt werden kann.

Die ringförmige Arbeitskammer 14 ist über eine axiale Bohrung mit einem Arbeitsanschluß 16 und dieser mit einer Arbeitsleitung 17 verbunden, die wiederum über ein Arbeitsventil mit einem Druckmittelvorratsbehälter in Verbindung steht. In entsprechender Weise ist die Signalkammer 15 über einen Anschluß 18 an eine Signalleitung 19 angeschlossen, die wiederum an einem Steuerventil und einem Druckmittelvorratsbehälter angeschlossen ist

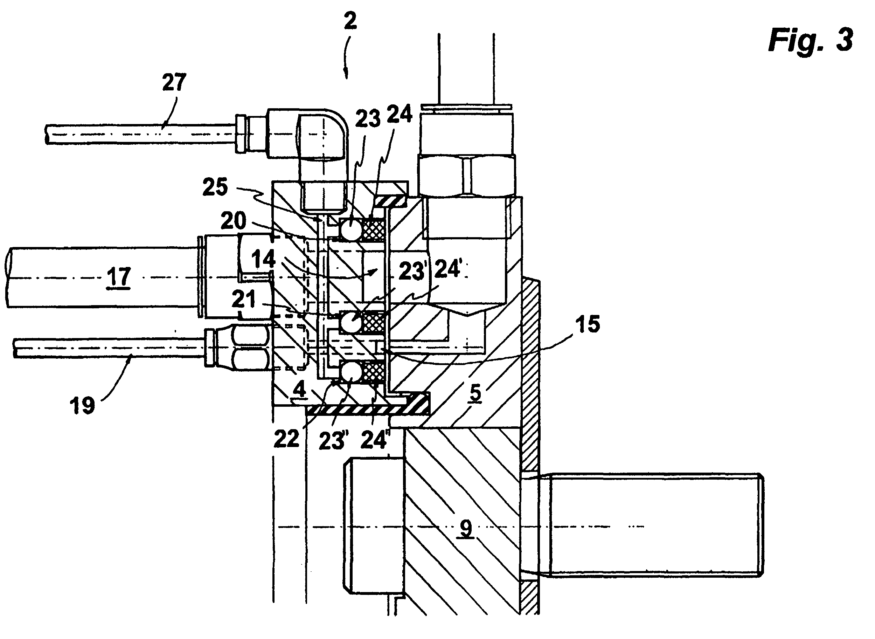

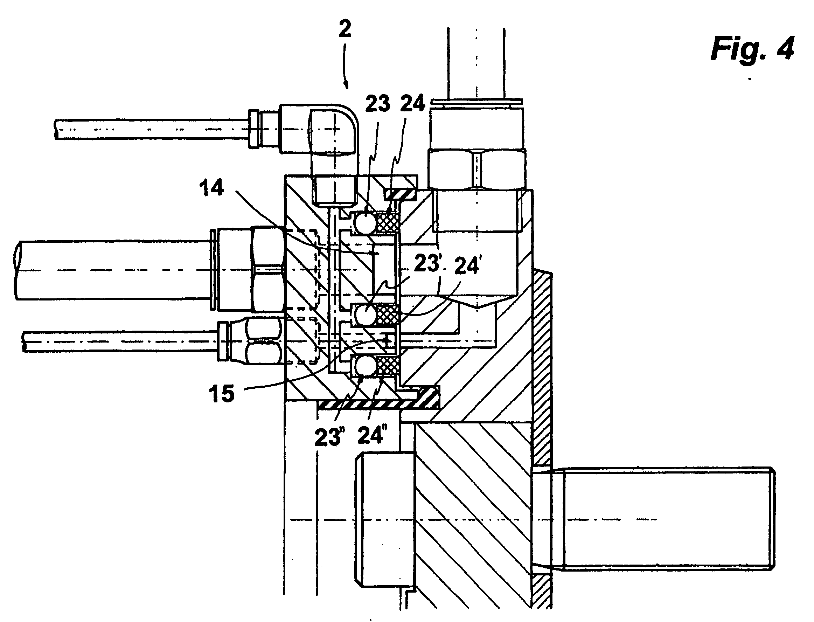

Konzentrisch zu den beiden Kammern 14, 15 sind in den statorseitigen Ringkörper 4 benachbart zu jeder Kammer 14, 15 Ringnuten 20 - 22 ausgehend von dem Bewegungsspalt 11 eingebracht, die zur Aufnahme jeweils einer Dichtringanordnung bestehend jeweils aus zwei in den Figuren 3 und 4 näher dargestellten Dichtringen 23, 24; 23',24'; 23", 24" dienen. Das hintere Ende jeder Ringnut 20 - 22 ist durch einen radial die Ringnuten 20 - 22 verbindenden Steuerkanal 25 mit einem radial zu dem statorseitigen Ringkörper 4 angeordneten Steueranschluß 26 und einer an diesem angeordneten Steuerleitung 27 verbunden. Es kann vorgesehen sein, daß anstelle des Steueranschlusses 26 mehrere, umfänglich verteilte Steueranschlüsse mit entsprechenden Steuerkanälen vorgesehen sind, um eine gleichmäßige Druckbeaufschlagung der Ringnuten 20 - 22 zu unterstützen. Der Dichtring 23, 23', 23" einer jeden Dichtringanordnung ist bei dem dargestellten Ausführungsbeispiel als O-Ring ausgebildet und dient zum Abdichten der Ringnuten 20, 21, 22 gegenüber dem in dem Steuerkanal 25 befindlichen Druckmittel. Der zweite Dichtring 24, 24', 24" jeder Dichtringanordnung dient zum Kontaktieren des rotorseitigen Ringkörpers 5 und ist aus diesem Grunde besonders abriebsfest und wärmebeständig ausgebildet. Der erste Dichtring 23, 23', 23" kann als herkömmlicher O-Ring ausgebildet sein, während der zweite Dichtring 24, 24', 24" aus gesintertem Teflon bestehen kann. Die Dichtringanordnung in jeder Ringnut 20 - 22 stellt quasi jeweils einen Kolben dar, der bei einer Druckbeaufschlagung der Steuerleitung 27 und entsprechend der hinteren Bereiche der Ringnuten 20 - 22 bestrebt ist, aus den Ringnuten 20 - 22 heraus und in den Bewegungsspalt 11 hineingedrückt zu werden. Eine solche Druckbeaufschlagung führt somit dazu, daß die Vorderseiten der zweiten Dichtringe 24, 24', 24" an der den Bewegungsspalt 11 seitens des rotorseitigen Ringkörpers 5 begrenzenden Fläche zur Anlage gelangen. Die Kammern 14, 15 sind dann in radialer Richtung abgedichtet.

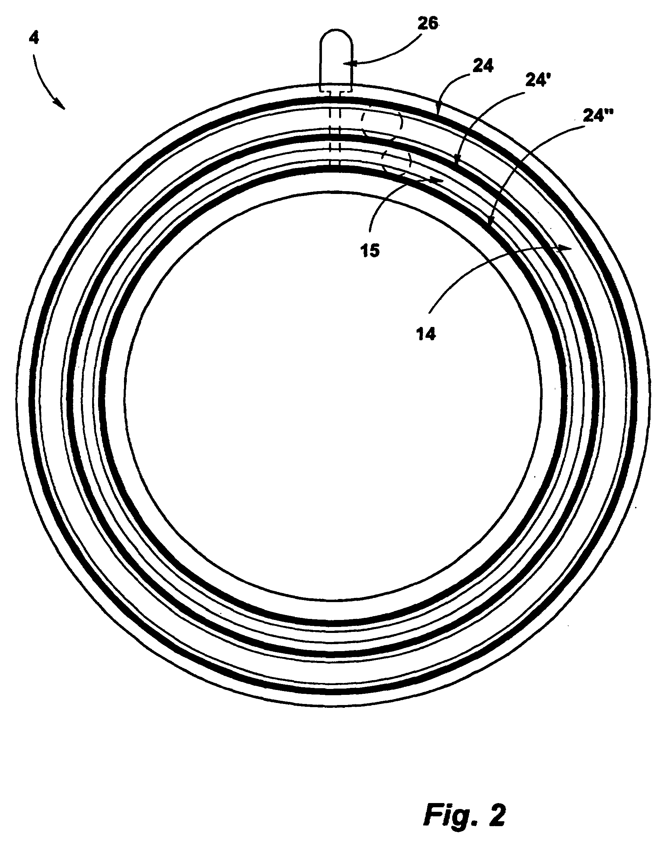

Die konzentrische Anordnung der einzelnen Elemente des statorseitigen Ringkörpers 4 ist ebenso wie der Steueranschluß 26 der Figur 2 entnehmbar.

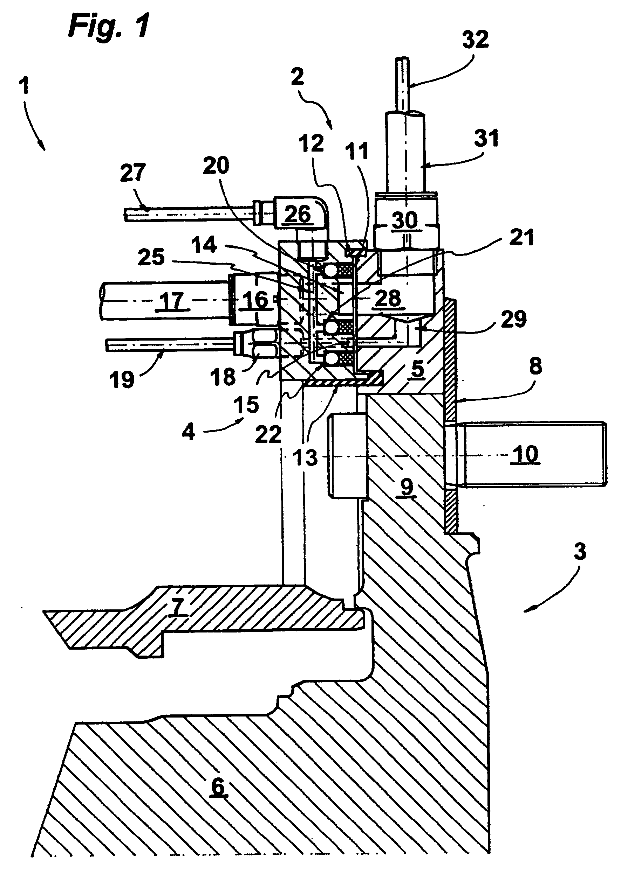

In axialer Richtung mit den Kammern 14, 15 fluchtend sind in den rotorseitigen Ringkörper 5 Durchgangskanäle 28, 29 eingebracht, die in dem dargestellten Ausführungsbeispiel rechtwinklig umgelenkt jeweils eine Verbindung zu einem radial an dem rotorseitigen Ringkörper 5 angeordneten Abganganschluß 30 bilden. In Figur 1 ist der Abganganschluß (Arbeitsabgang) 30 erkennbar, an dem die zum Reifen führende rotorseitige Arbeitsleitung 31 angeschlossen ist. Der Signalabgang liegt in der Darstellung der Figur 1 hinter dem Arbeitsabgang 30; erkennbar ist lediglich die von dem Signalabgang abgehende, an dem Füllventil angeschlossene Signalleitung 32.

Die in den Figuren dargestellte Reifendruckregelanlage 1, insbesondere die Drehdurchführung 2 ist nur bei einem Betrieb der Reifendruckregelanlage 1 druckbeaufschlagt. Ansonsten ist die Drehdurchführung 2 drucklos, da nach einem Betrieb der Reifendruckregelanlage 1 die Leitungen 17, 19, 27, 31, 32 entlüftet werden. Diese Nicht-Betriebssituation der Reifendruckregelanlage 1, insbesondere der Drehdurchführung 2 ist in Figur 3 dargestellt. Die beiden Dichtringe 23, 24, 23', 24', 23", 24" jeder Dichtringanordnung befinden sich innerhalb der Ringnuten 20, 21 und 22. Die vorderen, zweiten Dichtringe 24, 24', 24" liegen nicht an dem rotorseitigen Ringkörper 5 an. Ist eine Reifendruckregelung gewünscht, wird die Steuerleitung 27 druckbeaufschlagt, so daß die Dichtanordnungen aus den Ringnuten 20 - 22 soweit herausgedrückt werden, daß die Dichtringe 24, 24', 24" vorderseitig an der dem Bewegungsspalt 11 zugewandten Seite des Ringkörpers 5 anliegen (vgl. Figur 4). Durch diese Maßnahme ist die Arbeitskammer 14 durch die in den Ringnuten 20 und 21 befindliche Dichtringanordnung und die Signalkammer 15 durch die in den Ringnuten 21 und 22 befindliche Dichtringanordnung in radialer Richtung abgedichtet. Nunmehr kann die Signalleitung 19 druckbeaufschlagt werden, um das am Ende der rotorseitigen Signalleitung 32 befindliche Füllventil (am Reifen) zu öffnen, bevor die Arbeitsleitung 17 zum Befüllen des Reifens mit dem Druckmittel beaufschlagt wird. Eine Übertragung der Druckmittel erfolgt Ober die Kammern 15, 14 von dem statorseitigen Ringkörper 4 auf den rotorseitigen Ringkörper 5. Nach Beenden des Befüllungsvorganges wird erneut die Signalleitung 19 mit einem Druckmittel beaufschlagt, um das Füllventil zu schließen. Anschließend werden die Leitungen 17, 19 entlüftet, was ebenfalls zu einer Entlüftung der Leitungen 31, 32 und somit der Kammern 14, 15 führt. In einem nächsten Schritt wird die Steuerleitung 27 drucklos geschaltet, so daß die Dichtringanordnungen durch die natürliche Unwucht der beiden Ringkörper 4, 5 zueinander soweit in die Ringnuten 20, 21, 22 hineingeschlagen werden, daß der Ringkörper 5 sich berührungslos an diesen vorbeibewegt.

Die Tiefe der zweiten Dichtringe 24, 24', 24" ist zweckmäßigerweise so bemessen, daß bei einem bestimmungsgemäßen Einsatz der Reifendruckregelanlage 1 ein Verschleiß dieser zweiten Dichtringe 24, 24', 24" etwa derjenigen Zeitspanne entspricht, nach der ohnehin am Rad Wartungsarbeiten vorzunehmen sind. Von Vorteil bei der erfindungsgemäßen Reifendruckregelanlage 1 ist insbesondere auch das selbsttätige Nachstellen der Dichtringanordnungen zur Kompensation auftretender Verschleißerscheinungen, ohne daß zur Gewährleistung einer ausreichenden Dichtigkeit Dichtringe 24, 24', 24" ersetzt werden müßten.

Der im Rahmen dieser Ausführungen benutzte Begriff "Ringkörper" definiert sowohl Ringkörper, die als eigene gegenständliche Einheit, wie beispielsweise in dem durch die Figuren beschriebenen Ausführungsbeispiel dargestellt oder auch Teil eines anderen Bauelementes, beispielsweise des Radflansches oder der Feige eines auf dem Radflansch zu montierenden Rades sein können. Insbesondere bei Vorsehen des rotorseitigen Ringkörpers in der Felge ist eine Wartungsarbeit an dem statorseitigen Ringkörper im Hinblick auf eine gegebenenfalls notwendige Erneuerung der eingesetzten Dichtringanordnungen besonders zweckmäßig, da zu dieser Wartung lediglich das Rad abgenommen werden muß.

### Zusammenstellung der Bezugszeichen

- 1: Reifendruckregelanlage
- 2: Drehdurchführung
- 3: Rad
- 4: Ringkörper, statorseitig
- 5: Ringkörper, rotorseitig
- 6: Antriebsstrang
- 7: Achskörper
- 8: Halteflansch
- 9: Radflansch
- 10: Radbolzen
- 11: Bewegungsspalt
- 12: Führungsband
- 13: Führungsband
- 14: Arbeitskammer
- 15: Signalkammer
- 16: Arbeitsanschluß
- 17: Arbeitsleitung
- 18: Anschluß
- 19: Signalleitung
- 20: Ringnut
- 21: Ringnut
- 22: Ringnut
- 23,23',23": Dichtring
- 24,24',24": Dichtring
- 25: Steuerkanal
- 26: Steueranschluß
- 27: Steuerleitung
- 28: Durchgangskanal
- 29: Durchgangskanal
- 30: Abganganschluß
- 31: Arbeitsleitung
- 32: Signalleitung

## Patentansprüche

1. Reifendruckregelanlage für Kraftfahrzeuge
- mit einer Drehdurchführung (2) zum Übertragen eines Druckmittels von einem gegenüber einem drehbar gelagerten Rad (3) feststehenden Teil des Kraftfahrzeugs auf das drehbar gelagerte Rad (3),
- wobei die Drehdurchführung (2) zumindest eine durch einen statorseitig und durch einen rotorseitig konzentrisch zur Drehachse des Rades (3) angeordneten Ringkörper (4, 5) begrenzte Kammer (14, 15) aufweist, und
- wobei zur Abdichtung der zumindest einen Kammer (14, 15) zwischen dem statorseitigen Ringkörper (4) und dem rotorseitigen Ringkörper (5) Dichtringe (23, 24; 23', 24'; 23", 24") eingesetzt sind,
**dadurch gekennzeichnet, daß**
- der statorseitige Ringkörper (4) und der rotorseitige Ringkörper (5) in axialer Richtung bezogen auf die Drehachse des Rades (3) nebeneinanderliegend, einen Bewegungsspalt (11) belassend angeordnet sind,
- in die zum rotorseitigen Ringkörper (5) weisende Fläche des statorseitigen Ringkörpers (4) zur radialen Abdichtung der zumindest einen Kammer (14, 15) zwei konzentrische Ringnuten (20, 21; 21, 22) eingebracht sind,
- die Ringnuten (20, 21; 21, 22) mit ihrem von dem rotorseitigen Ringkörper (5) wegweisenden Abschluß an eine mit einem Druckmittel beaufschlagbare Steuerleitung (25, 27) angeschlossen sind,
- in die Ringnuten (20, 21; 21, 22) jeweils einer der Dichtringe (23, 24; 23', 24'; 23", 24") eingesetzt ist, der bei Druckbeaufschlagung der Steuerleitung (25, 27) in Richtung zum rotorseitigen Ringkörper (5) hin bewegt wird, und
- von dem rotorseitigen Ringkörper (5) in die zumindest eine Kammer (14, 15) eine Abgangsleitung (28, 29) mündet.

2. Reifendruckregelanlage nach Anspruch 1, **dadurch gekennzeichnet, daß**
- zur Ausbildung der zumindest einen Kammer (14, 15) in einen der beiden Ringkörper (4, 5) eine zu den Dichtringen (23, 24; 23', 24'; 23", 24") konzentrisch verlaufende Nut eingebracht ist.

3. Reifendruckregelanlage nach Anspruch 2, **dadurch gekennzeichnet, daß**
- die die zumindest eine Kammer (14, 15) ausbildende Nut in den statorseitigen Ringkörper (4) eingebracht ist.

4. Reifendruckregelanlage nach einem der Ansprüche 1 bis 3, **dadurch gekennzeichnet, daß**
- jedem Dichtring (23, 23', 23") ein weiterer Dichtring (24, 24', 24") zugeordnet ist, wobei der (hintere) Dichtring (23, 23', 23") zum Abdichten der Nut (20, 21, 22) gegenüber einem Austreten des Druckmittels und der bei einer Druckbeaufschlagung der Ringnut (20, 21, 22) an den rotorseitigen Ringkörper (5) grenzende weitere (zweite, vordere) Dichtring (24, 24', 24") eine hohe Abriebsund Wärmebeständigkeit aufweist.

5. Reifendruckregelanlage nach einem der Ansprüche 1 bis 4, **dadurch gekennzeichnet, daß**
- der zwischen dem statorseitigen Ringkörper (4) und dem rotorseitigen Ringkörper (5) befindliche Bewegungsspalt (11) nach außen hin durch Führungsbänder (12, 13) abgedichtet ist.

6. Reifendruckregelanlage nach einem der Ansprüche 1 bis 5, **dadurch gekennzeichnet, daß**
- die Abgangsleitung (28, 29) des rotorseitigen Ringkörpers (5) einen radial zum rotorseitigen Ringkörper (5) angeordneten Abganganschluß (30) aufweist.

7. Reifendruckregelanlage nach einem der Ansprüche 1 bis 6, **dadurch gekennzeichnet, daß**
- der rotorseitige Ringkörper (5) über einen am Radflansch (9) befestigbaren Halteflansch (8) am Rad (3) befestigt ist.

8. Reifendruckregelanlage nach einem der Ansprüche 1 bis 7, wobei die Reifendruckregelanlage (1) eine Arbeitsleitung (17, 31) zum Beund Entlüften des Reifens und eine Signalleitung (19, 32) zum Betätigen eines dem Reifen zugeordneten Füllventils aufweist, **dadurch gekennzeichnet, daß**
― die Drehdurchführung zwei konzentrisch zueinander angeordnete Kammern (14,15) aufweist.

9. Reifendruckregelanlage nach Anspruch 8, **dadurch gekennzeichnet, daß**
― zur Trennung der beiden Kammern (14, 15) eine gemeinsame Nut (21) mit einem eingesetzten Dichtring (23', 24') vorgesehen ist.

10. Reifendruckregelanlage nach einem der Ansprüche 1 - 9, **dadurch gekennzeichnet, daß**
- der rotorseitige Ringkörper (5) Teil eines anderen Bauteiles, beispielsweise des Radflansches oder einer Felge ist.

## Claims

1. Tyre pressure control system for an automotive vehicle, said system having
- a rotary transmission lead-through (2) for transmitting a pressurised fluid from a portion of the automotive vehicle which is stationary relative to a rotatably mounted wheel (3), to said rotatably mounted wheel (3),
- the rotary transmission lead-through (2) having at least one chamber (14,15) delimited by an annular body (4) disposed on the side of the stator and by an annular body (5) disposed on the side of the rotor, concentrically with respect to the rotational axis of the wheel, and
- sealing rings (23,24;23',24';23",24") being inserted between the stator-side annular body (4) and the rotor-side annular body (5) to seal the at least one chamber (14, 15),
**characterised in that**
- the stator-side annular body (4) and the rotor-side annular body (5) are disposed adjacent to one another in an axial direction in relation to the rotational axis of the wheel (3), leaving a motion gap (11),
- two concentric annular grooves (20,21;21,22) are introduced into the face of the stator-side annular body (5) which points towards the rotor-side annular body (5) to seal radially the at least one chamber (14, 15),
- the annular grooves (20,21;21,22) are connected by their end portion, which points away from the rotor-side annular body (5), to a control line (25,27) which can be charged with a pressurised fluid,
- into each of the annular grooves (20,21; 21,22) is inserted respectively one of the sealing rings (23,24;23',24';23",24"), which is moved towards the rotor-side annular body (5) when pressure is applied to the control line (25, 27), and
- a discharge line (28,29) opens from the rotor-side annular body (5) into the at least one chamber (14,15).

2. Tyre pressure control system according to claim 1, **characterised in that** a groove which extends concentrically with respect to the sealing rings (23,24;23',24';23",24") is introduced into one of the two annular bodies (4,5) in order to form the at least one chamber (14,15).

3. Tyre pressure control system according to claim 2, **characterised in that**
- the groove forming the at least one chamber (14,15) is introduced into the stator-side annular body (4).

4. Tyre pressure control system according to one of claims 1 to 3, **characterised in that**
- there is associated with each sealing ring (23,23',23") an additional sealing ring (24,24',24"), the (rear) sealing ring (23, 23',23") for sealing the groove (20,21,22) against leakage of the pressurised fluid, and the additional (second, front) sealing ring (24,24',24"), adjoining the rotor-side annular body (5) when pressure is applied to the annular groove (20,21,22), having high abrasion resistance and thermal stability.

5. Tyre pressure control system according to one of claims 1 to 4, **characterised in that**
- the motion gap (11) situated between the stator-side annular body (4) and the rotor-side annular body (5) is sealed towards the exterior by guidance bands (12,13).

6. Tyre pressure control system according to one of claims 1 to 5,
**characterised in that**
- the discharge line (28,29) of the rotor-side annular body (5) has a discharge connection (30) disposed radially with respect to the rotor-side annular body (5).

7. Tyre pressure control system according to one of claims 1 to 6,
**characterised in that**
- the rotor-side annular body (5) is secured to the wheel (3) by means of a retaining flange (8) which can be secured to the wheel flange (9).

8. Tyre pressure control system according to one of claims 1 to 7, said control system (1) having an operating line (17,31) for admitting air to, and removing air from, the tyre and a signal line (19,32) for actuating a filling valve associated with the tyre, **characterised in that**
- the rotary transmission lead-through has two chambers (14,15) which are arranged concentrically with respect to each other.

9. Tyre pressure control system according to claim 8, **characterised in that**
- a common groove (21) having an inserted sealing ring (23',24') is provided to separate the two chambers (14,15).

10. Tyre pressure control system according to one of claims 1 to 9, **characterised in that**
- the rotor-side annular body (5) is part of some other component, for example the wheel flange or a wheel rim.

## Revendications

1. Installation de réglage de la pression des pneus pour véhicules à moteur
- comprenant un passage tournant (2) pour transférer sur une roue (3) logée sur un axe rotatif, un moyen de pression à partir d'une partie d'un véhicule à moteur, partie fixe par rapport à la roue (3) logée sur un axe rotatif,
- sachant que le passage tournant (2) présente au moins une chambre (14, 15) délimitée par des corps circulaires (4, 5) disposés de manière concentrique par rapport à l'axe de rotation de la roue (3), du côté du stator et du côté du rotor et
- sachant que l'étanchéité d'au moins une chambre (14, 15) est assurée par des bagues d'étanchéité (23, 24 ; 23', 24' ; 23", 24") placées entre le corps circulaire (4) du côté du stator et le corps circulaire (5) du côté du rotor.
**caractérisée en ce que**
- le corps circulaire (4) du côté du stator et le corps circulaire (5) du côté du rotor sont disposés l'un à côté de l'autre, dans le sens axial si l'on se réfère à l'axe de rotation de la roue (3), tout en laissant un intervalle de mouvement (11 ),
- dans la surface du corps circulaire (4) côté stator orientée vers le corps circulaire (5) du côté du rotor sont placées deux rainures circulaires (20, 21 ; 21, 22) concentriques afin d'assurer l'étanchéité radiale d'au moins une chambre (14, 15),
- les rainures circulaires (20, 21 ; 21, 22) sont raccordées par leurs terminaisons opposées au corps circulaire (5) du côté du rotor à une conduite de commande (25, 27) qui peut être mise sous pression à l'aide d'un moyen de pression,
- l'une des bagues d'étanchéité (23, 24 ; 23', 24' ; 23", 24") est placée respectivement dans chaque rainure circulaire (20, 21 ; 21, 22) et bouge vers le corps circulaire (5) du côté du rotor lorsque la conduite de commande (25, 27) est mise sous pression, et
- une conduite de sortie (28, 29) venant du corps circulaire (5) du côté du rotor débouche dans au moins une chambre (14, 15).

2. Installation de réglage de la pression des pneus selon la revendication 1, **caractérisée en ce que**
- pour former au moins une chambres (14, 15), on aménage dans l'un des deux corps circulaires (4, 5) une rainure disposée de manière concentrique par rapport aux bagues d'étanchéité (23, 24 ; 23', 24' ; 23", 24").

3. Installation de réglage de la pression des pneus selon la revendication 2, **caractérisée en ce que**
- la rainure formant au moins une chambre (14, 15), est placée dans le corps circulaire (4) du côté du stator.

4. Installation de réglage de la pression des pneus selon l'une des revendications 1 à 3, **caractérisée en ce que**
- à chaque bague d'étanchéité (23, 23', 23") est affectée une autre bague d'étanchéité (24, 24', 24") sachant que la bague d'étanchéité (23, 23', 23") (arrière) assure l'étanchéité de la rainure (20, 21, 22) pour qu'il n'y ait pas de fuites de moyen de pression et que l'autre (seconde) bague d'étanchéité (24, 24', 24")(avant) contiguë au corps circulaire (5) du côté du rotor présente lors d'une mise sous pression de la rainure circulaire (20, 21, 22) une haute résistance à l'abrasion et à la chaleur.

5. Installation de réglage de la pression des pneus selon l'une des revendications 1 à 4, **caractérisée en ce que**
- l'étanchéité de l'intervalle de mouvement (11 ) se trouvant entre le corps circulaire (4) du côté du stator et le corps circulaire (5) du côté du rotor, est assurée vers l'extérieur par des bandes d'étanchéité (12, 13).

6. Installation de réglage de la pression des pneus selon l'une des revendications 1 à 5, **caractérisée en ce que**
- la conduite de sortie (28, 29) du corps circulaire (5) du côté du rotor présente un raccord de sortie (30) disposé radialement par rapport au corps circulaire (5) du côté du rotor.

7. Installation de réglage de la pression des pneus selon l'une des revendications 1 à 6, **caractérisée en ce que**
- le corps circulaire (5) du côté du rotor est fixé à la roue (3) au moyen d'une bride de fixation (8) qui peut être fixée sur le boudin de roue (9).

8. Installation de réglage de la pression des pneus selon l'une des revendications 1 à 7, sachant que l'installation de réglage de la pression des pneus (1) comporte une conduite de travail (17, 31) pour gonfler ou dégonfler le pneu et une conduite à signal (19, 32) pour actionner une valve de remplissage affectée au pneu **caractérisée en ce que**
- le passage tournant présente deux chambres (14, 15) disposées de manière concentrique l'une par rapport à l'autre.

9. Installation de réglage de la pression des pneus selon la revendication 8, **caractérisée en ce que**
- il est prévu pour séparer les deux chambres (14, 15) une rainure commune (21) dans laquelle est placée une bague d'étanchéité (23', 24').

10. Installation de réglage de la pression des pneus selon l'une des revendications 1 à 9, **caractérisée en ce que**
- le corps circulaire (5) du côté du rotor est une partie d'une autre unité constructive, par exemple du boudin de roue ou d'une jante.
